(19) Europäisches Patentamt
European Patent Office
Office européen des brevets

(11) Publication number: 0 173 895
A2

# (12) EUROPEAN PATENT APPLICATION

(21) Application number: 85110179.0

(22) Date of filing: 14.08.85

(51) Int. Cl.[4]: C 01 B 33/28
C 01 B 33/18, B 01 J 29/28
B 01 J 21/04

(30) Priority: 04.09.84 US 647177

(43) Date of publication of application:
12.03.86 Bulletin 86/11

(84) Designated Contracting States:
DE FR GB IT NL

(71) Applicant: W.R. GRACE & CO.
Grace Plaza 1114 Avenue of the Americas
New York New York 10036(US)

(72) Inventor: Chang, Charles Chingren
7379 Route 32
Columbia, Md. 21044(US)

(72) Inventor: Waters, Sandra Mary
100 South Prospect Avenue
Catonsville, Md. 21228(US)

(72) Inventor: Sanchez, Moises Gali
480 Severnside Drive
Severna Park, Md. 21146(US)

(74) Representative: UEXKÜLL & STOLBERG Patentanwälte
Beselerstrasse 4
D-2000 Hamburg 52(DE)

## (54) A process for making crystalline siliceous materials.

(57) ZSM-5 crystallites are produced in the as-synthesized form with very low levels of blocking tetrapropyl ammonium (Q) ions. The reaction mixture contains sources of silica, soda, alumina and trace amounts of Q ions as nucleation agents. Because the crystallites as synthesized from the aqueous medium exhibit only a very small fraction of blocking cations, there is always a diffusion path for the hydrated sodium ions to be exchanged without the need of prior removal of the blocking cations by calcination or otherwise. The small size crystallites can be exchanged, blended with matrix material, and formed into catalyst particles. The silcia to alumina ratio can be varied and when no aluminium is added, silicalite may be formed. The synthesis can be done in 24 hours or less.

EP 0 173 895 A2

Croydon Printing Company Ltd.

## Field of the Invention

This invention relates to a process to make any uniform size crystallites of the zeolite ZSM-5 which can be directly ion exchanged without requiring calcination of the as crystallized product.

## Background of the Invention

The synthetic zeolite ZSM-5 has been described by Argauer et al in U.S. Patent No. 3,702,886 and by many others since 1972. ZSM-5 is a zeolite which crystallizes in the orthorhombic system with unit cell dimensions of about:

$a_0$ = 20.1 Angstrom units
$b_0$ = 19.8 Angstrom units, and
$c_0$ = 13.4 Angstrom units

The unit cell contains 96 atoms of silicon and aluminum, each tetrahedrally coordinated with oxygen which are often referred to as silicon and aluminum tetrahedrons (also silica and alumina tetrahedrons). As pointed out in the basic Argauer et al patent, silicon can be replaced with germanium and aluminum can be replaced with gallium to still obtain ZSM-5. As used herein the term silica is to include germania and mixtures of germania and silica and the term alumina is to include gallia and mixtures of gallia and alumina. The proportion of silicon to aluminum may vary depending on composition. For example, a ZSM-5 product with a $SiO_2$ to $Al_2O_3$ mole ratio of 46:1 will contain, on average, 92 silicon and 4 aluminum tetrahedrons per unit cell. These tetrahedrons form a rigid covalent framework. The zeolite may contain other substances or ions which are not part of the framework. For example, it may include cations, water, organic molecules, hydroxyl ions or gases. These substances are present in the pores within the crystal structure. ZSM-5

crystals are traversed by two sets of channels or pores. A set of essentially straight pores which run parallel to the "b" axis and a set of pores which zigzag or undulate in the direction parallel to the "a" axis. The two sets of pores or channels intersect on a regular and repetitive manner such that each unit cell includes four such intersections.

Thus, a typical unit cell can be represented in simple terms by the following symbolic notation:

$$M_x\ Si_{96-x}\ Al_x\ O_{192}\ \square_4 \qquad \text{Formula (1)}$$

in which

M represents monovalent cations such as alkali metals, organic bases, or $H^+$.

$\square$ represents the pore intersections, and the other symbols have their usual chemical meaning.

Note that the summation of silicon and aluminum equals 96 (the number of tetrahedrons per unit cell) and that the number of monovalent cations equals the number of aluminum atoms.

One can further refine the symbolic representation of a typical unit cell by indicating the presence of organic bases such as, for example, normal tetrapropyl ammonium ion $[(n-C_3H_7)_4N]^+$ hereinafter designated by the letter Q, which, because of its size and shape, is centered in the intersections unable to move within the rigid framework and, therefore, blocking diffusion or flow of other molecular species or ions.

The representation takes the following form:

$$M_{x-y}\ Si_{96-x}\ Al_x\ O_{192}\ \square_{4-y}\ \boxed{Q}_y \qquad \text{Formula (2)}$$

in which

☐ represents the "open" intersections which are either empty or filled with small molecules or ions which are capable of and allow diffusion or flow through the channels and intersections, and

[Q] represents those intersections which are occupied by large, fixed ions such as tetrapropyl ammonium (represented by Q) which block diffusion and flow through those intersections. Note that the summation of "open" and blocked intersections is four.

Although Formula (2) does not include all of the components of the ZSM-5 zeolite in each and every of its possible forms, it includes all of its key functional components. Formula (2) provides the following important information:

- the silica to alumina mole ratio: $R = \frac{2\ (96-x)}{x}$,
- the number of blocking templates per unit cell: y,
- the number of intersections per unit cell: 4,
- the fraction of blocked pore intersections: $f = \frac{y}{4}$,
- the particular cationic form ($Na^+$, $NH_4^+$, $H^+$, etc.) of the zeolite,
- the electrical neutrality of the system, and
- a general basis to define stoichiometric proportions in a ZSM-5 product.

Under this notation x indicates the number of aluminum atoms in the unit cell and thus there will be 96-x silicon atoms since the total of these two elements is 96. There are 4 intersections for each unit cell which are represented by the 2 boxes. The one on the far right

represents the number of intersections, (y), filled with Q ions, and the other box represents the remaining intersections which do not contain Q ions and they number 4-y. Electrical charge neutrality is maintained since the number of monovalent cations equals the number of alumina atoms in the structure.

The $SiO_2$ to $Al_2O_3$ mole ratio in ZSM-5 can be varied and ZSM-5 zeolites have been made with very large $SiO_2$ to $Al_2O_3$ mole ratios. Dwyer et al in U.S. Patent No. 4,441,991 refer to high ratio zeolites disclosed in U.S. Patent No. Re 29,948 and equivalents of such zeolites, e.g., silicalite disclosed in U.S. Patent No. 4,061,724. Dwyer et al indicate the equivalency of these two zeolites is known in the art, as discussed, for example, by Fyfe et al, in Resolving Crystallographically Distinct Tetrahedral Sites in Silicalite and ZSM-5 by Solid State NMR, 296 Nature 530 (Apr. 8, 1982), by Rees in When is a Zeolite Not a Zeolite, 296 Nature 491 (Apr. 8, 1982), and by Bibby et al., in Silicalite-2, a Silica Analogue of the Aluminosilicate Zeolite ZSM-11, 280 Nature 664 (Aug. 23, 1979). As used herein the term ZSM-5 zeolite also includes silicalite.

In the classical synthesis of ZSM-5, following the teachings of the Plank et al patent (U.S. Patent No. 3,926,782), tetrapropylammonium ion (Q) is used as a template. Crystallization of the silica and alumina tetrahedrons takes place around the Q ions which end up occluded at the intersections of the two sets of pores. The Plank et al synthesis requires the use of large excess of Q ions in relation to the number of intersections in the resulting ZSM-5 structure. As a result, a large proportion of the Q employed ends up in solution in the mother liquor following synthesis and the remainder ends up within the crystal structure.

Symbolically the Plank et al product may be represented in its key features by:

$$Na_{x-y}\ Si_{96-x}\ Al_x\ O_{192}\ \square_{4-y}\ \boxed{Q}_y \qquad \text{Formula (3)}$$

in which y is nearly 4, and the degree of blocking is essentially complete.

Essentially all substances or ions of appreciable size, such as for example hydrated sodium ions, will be unable to diffuse freely through the structure until the blocking Q ions are removed. Furthermore, the Q ions cannot be easily removed because their size is large, and their fit is very tight. For all practical purposes the Q ions are occluded and fixed. The only practical way to remove the occluded Q ions from the structure is to break down these large cations through pyrolysis at high temperature and/or oxidation. Once the Q has been removed from the structure, the channels and intersections become open to diffusion of molecules or ions of sizes generally below about 5 Angstroms. For example, hydrated sodium ions may easily diffuse through an aqueous medium and be exchanged by other cations such as, for example, ammonium. Since the most common use of ZSM-5 as a catalyst is in the hydrogen form, its preparation will normally require the following sequence of principal steps:

- synthesis using organic materials as the templates,
- high temperature calcination to remove organic blocking cations such as Q,
- exchange of alkali metal ions with ammonium ion, and
- decomposition at elevated temperature of the ammonium ion into the hydrogen form of the zeolite and gaseous ammonia.

Attempts have been made to make ZSM-5 with small crystallite sizes. When used as a catalyst in hydrocarbon conversion these small size crystallites retard catalyst aging during the hydrocarbon processing reactions as disclosed by Plank et al in U.S. Patent No. 3,926,782. The zeolites in the Plank et al patent were made with either relatively large concentrations of tetrapropyl ammonium bromide (QBr) or a tertiary amine and an alkyl halide (such as bromide) which would form a tetra-alkyl ammonium halide such as QBr when using tripropylamine and propylbromide. The disposal of these materials in the waste reactant mixtures presents environmental pollution problems. Furthermore, the zeolite as formed had to be calcined before being ion exchanged. Haag et al in U.S. Patent No. 4,326,994 also used large concentrations of a polyalkyl amine and an organic halide (which would combine to form a tetra-alkyl ammonium halide such as QBr) to make small crystallites. Again, it was necessary to calcine the zeolites before they could be exchanged.

In these prior systems using Q ions, the amount of Q employed was very large. For example, in the basic Argauer et al U.S. Patent No. 3,702,886 the first example uses over 1250% of the amount of Q needed to occupy all intersections on the basis of the unit cell stoichiometry of Formula (2).

ZSM-5 has also been produced from reaction systems containing seeds. Rollmann et al U.S. Patent No. 4,203,869 disclosed using ZSM-5 crystals as seeds and noted that the successful crystallization required the further presence of Q, the tetrapropylammonium cation. Plank et al in U.S. Patent No. 4,175,114 used seeds alone or in combination with an alcohol. The alcohols disclosed

were aliphatic alcohols and preferably containing 2 to 5 carbon atoms. Illustratively named alcohols were ethanol, propanol, butanol and pentanol. The patentees stated they contemplated that the alcohols could be straight or branched chain. There was no mention of the crystallite size obtained.

ZSM-5 has also been made in a low sodium form so the zeolite need not be ion exchanged prior to use. Rubin et al in U.S. Patent No. 4,151,189 disclosed using propylamines with stirring to produce a zeolite in the as-synthesized form which had less than 0.14% by weight of alkali metal. There was no discussion of the crystallite size. Plank et al in U.S. Patent No. 4,341,748 claimed an uncalcined form of ZSM-5 which was capable of substantially complete ion exchange of its original metal cations without prior calcination. The disclosure was a continuation-in-part of the Plank et al U.S. Patent No. 4,175,114 patent discussed above with regard to seeding and it had the same examples.

ZSM-5 has also been made in reaction systems which do not utilize the large Q ion templates. Taramasso et al in U.S. Patent No. 4,431,621 disclosed the use of organic substances which contain hydroxyl functions such as alcohols and phenols and more particularly glycols and polyglycols.

## Objects of the Invention

It is an object of this invention to produce ZSM-5 crystallites of any size ranging from submicrometer to over ten micrometers.

It is a further object of this invention to produce very small ZSM-5 crystallites using only small to trace amounts of quaternary ammonium ions as templates or nucleating agents.

It is a further object to modify those known processes for making ZSM-5, which do not use tetrapropyl ammonium ions, by adding a combination of Q ions and other materials to produce ZSM-5 in submicron size crystallites.

It is a further object of this invention to produce ZSM-5 in the as synthesized and washed form which have large blocking organic compounds such as Q present in only a small fraction of the number of intersections in the zeolite structure.

It is a further object of this invention to obtain novel ZSM-5 in the as synthesized and washed form which have large blocking organic compounds such as Q present in only a small fraction of the number of intersections in the zeolite structure.

It is a further object of this invention to produce ZSM-5 having a high degree of crystallinity.

It is a further object of this invention to produce ZSM-5 from raw materials of low cost.

It is a further object of this invention to produce ZSM-5 by a non polluting process.

It is a further object of this invention to produce ZSM-5 by a process having a high equivalent product concentration as will be defined herein.

It is a further object of this invention to produce ZSM-5 by a process utilizing a reactor such as an autoclave with a very large reactor throughput as will be defined herein.

It is a further object of this invention to produce ZSM-5 which can be ion exchanged without requiring a precalcination step.

It is another object of this invention to produce ZSM-5 by using a recycle process.

It is a further object of this invention to produce silicalite and with the same objects as for making ZSM-5.

It is a further object of this invention to produce the intended zeolites by an overall low cost process.

It is a further object of this invention to blend the ZSM-5 obtained with matrix material to form catalyst particles.

These and further objects will become apparent as the description of the invention proceeds.

## Summary of the Invention

This invention relates to a process to synthesize ZSM-5 in an aqueous medium from sources of silica, soda and alumina in a specific concentration reaction mixture with trace amounts of tetrapropyl ammonium (Q) ions as the nucleation agent. Various size crystallites can be produced which have low levels of blocking Q ions present in the as synthesized form. Silicalite is made when the source of alumina is deleted.

This method is called the "Trace Molecular Seeds" process or simply the TMS process because the process uses a far-below-the-stoichiometric amount of QBr as "Trace Molecular Seeds" to begin the nucleation reaction which provides the seeding nuclei for subsequent crystallization growth. Under properly controlled conditions, crystallization proceeds readily without the need of any other templates such as organic substances having hydroxyl groups used in the Taramasso et al U.S. Patent No. 4,431,621 and it is completed in a matter of several hours. The zeolite products are uniform in the various crystallite sizes obtainable and they contain only a small concentration of Q ions.

The trace amount of QBr employed in the process is a small fraction of the stoichiometric amount of Q ions calculated on the basis of Formula (2) which would occupy all pore intersections within the structure. The amount used is generally less than 20% of the stoichiometric

amount based on Formula (2). For example, a product with $SiO_2$ to $Al_2O_3$ mole ratio of 46:1 can be prepared using generally less than 0.40 mole of QBr per mole of $Al_2O_3$ to give a ZSM-5 represented symbolically by:

$Na_{3.2}\ Si_{92}\ Al_4\ O_{192}\ \boxed{\phantom{Q}}_{3.2}\ \boxed{Q}_{0.80}$ Formula (4)

Because the crystallites as synthesized from the aqueous medium exhibit only a small fraction of blocking cations, there is always a diffusion path for the sodium ions to be exchanged without a need of prior removal of the blocking cations by calcination or otherwise. This significantly reduces processing costs and eliminates polluting steps as well. Merely by water washing the zeolite the excess NaOH may be removed from the structure. The degree of removal depends on the extent of washing. Insufficient washing will leave behind non zeolitic alkali metal hydroxide. By contacting the product with a solution of an ammonium salt such as $NH_4NO_3$, the sodium ion is readily exchanged and the zeolite essentially converted to the ammonium form.

By controlling the concentration of QBr used and selecting the right proportion of soda and water in the reaction slurry the TMS process can produce any desired size of zeolite crystallites ranging from submicrometer to over ten micrometers. When the right proportion of soda and water are employed the crystallite size of the zeolite product is generally inversely related to the amount of QBr used in the synthesis.

The present TMS process produces high quality ZSM-5 zeolites of a lower cost than previous processes and it provides a better control of the resulting product properties and quality. Furthermore, the process is non polluting. The high equivalent product concentration,

which is generally greater than 12% and often greater than 14%, and the short reaction time which takes about 24 to 8 hours or less to complete the ZSM-5 synthesis, combine to give excellent product reactor throughputs. All of which are significant improvements over prior art. The crystallites can be exchanged, blended with matrix material, and formed into catalyst particles. The silica to alumina ratio can be varied and when no aluminum is added, silicalite may be formed.

Description of the Preferred Embodiments

Our method produces a ZSM-5 zeolite having a $SiO_2$ to $Al_2O_3$ mole ratio R greater than 5, having crystallites ranging from submicrometer to over ten micrometers and having an average unit cell represented by the formula

$$M_{x-y}\ Si_{96-x}\ Al_x\ O_{192}\ \square_{4-y}\ \boxed{Q}_y \qquad \text{Formula (2)}$$

where $R = \frac{2(96-x)}{x}$

M represents monovalent cations such as alkali metals, organic bases, or $H^+$

$\square$ represents the intersections of the channels inside the ZSM-5 porous framework free of tetrapropyl ammonium ions, and

$\boxed{Q}$ represents the intersections of the channels inside the ZSM-5 porous framework having occluded tetrapropyl ammonium ions

The method uses a mixture containing a source of silica, a source of alumina, a source of sodium hydroxide, water and a small amount of tetrapropyl ammonium ions. The amount of tetrapropyl ammonium ions in the reaction mixture is

such that it is at least an effective amount and in an amount expressed in moles less than 1/120 of the sum of the number of moles of Si in the reaction mixture multiplied by 0.8 and the number of moles of Al in the reaction mixture. After the mixture is reacted in a heated reactor such as an autoclave, the ZSM-5 zeolite product is recovered.

The ZSM-5 zeolite obtained as synthesized has a small amount of Q ions in the intersections. In Formula (2) above the maximum value of y is 0.8 which corresponds to 20% of the theoretical stoichiometric amount. A more preferred value has y less than 0.6 and more preferably y is less than 0.4. At these concentrations, essentially all of the Q in the reaction mixture is deposited in the zeolite produced. In contrast to the small amounts of Q used in the present process all of the examples of the basic Argauer et al patent utilize more than 870% of the stoichiometric amount of Q which is about 44 times the upper limit of our process. With regard to our preferred upper limit of $y = 0.4$, Argauer et al use more than 88 times that amount in each of their six synthesis examples (Nos. 1-6).

The process according to the present invention produces ZSM-5 having a high degree of crystallinity, an occluded carbon content as prepared and water washed of less than 0.1 mole of carbon per mole of total silicon and aluminum contained in the ZSM-5, a zeolitic alkali metal content as prepared and water washed of less than one mole per mole of contained aluminum, a high degree of crystalline purity exhibiting a single crystalline phase, an aluminosilicate or silicalite structure, the capacity to be readily exchangeable without prior removal of Q ions, and containing as prepared and water washed less

than 1/120 mole of nitrogen per mole of total silicon and aluminum contained in the ZSM-5.

The ZSM-5 zeolite obtained after being water washed will normally have Na as M in Formula (2). This product can be further ammonium ion exchanged so that M becomes $NH_4^+$. It is also possible to at least partially exchange the as washed product with an equivalent amount of lanthanide ion. By lanthanide ion we mean the cations of all those elements having an atomic number of 57-71 inclusive plus the element yttrium.

The reaction slurries used in the present process have the molar ratios of ingredients set forth in Table 1.

Table 1

| | Broad | Preferred | Particularly Preferred |
|---|---|---|---|
| $SiO_2$ to $Al_2O_3$ | greater than 6 | 20-120 | 40-80 |
| $H_2O$ to $OH^-$ | 20-120 | 30-100 | 50-70 |
| (Si+Al) to $H_2O$ | 0.03-0.15 | 0.05-0.12 | 0.06-0.09 |
| Q to U | less than 0.8 | less than 0.6 | less than 0.4 |
| Reaction Temp. (°C) | 100-280 | 140-230 | 170-190 |
| Reaction Time (hrs.) | less than 24 | less than 12 | less than 8 |

The amount of $OH^-$ expressed above in moles is the sum of the moles of free alkali metal hydroxide and the moles of free tetrapropylammonium hydroxide. The term U is 1/96 of the sum of the number of moles of Si in the reacting mixture multiplied by 0.8 plus the number of moles of Al in the resulting mixture.

ZSM-5 zeolites can be produced from reactant slurries where the mole ratio of $SiO_2$ to $Al_2O_3$ can vary from about 5 up to any higher value. The desired mole ratio of

silica to alumina in the ZSM-5 product is controlled by the amount of silica and alumina added to the reaction mixture. If the silica to alumina ratio is greater than 6, then a product is obtained having a silica to alumina ratio greater than 5. In the absence of alumina the product silicalite is obtained. Preferred silica to alumina ratios range from between 20 to 120 with a more preferred ratio range being about 40 to 80. In general, essentially all of the alumina used in the reaction mixture ends up in the product zeolite. This is not the case with the silica. Because of the high alkalinity of the reaction system some of the silica remains in solution in the mother liquor. The specific proportion varies depending on the specific mixtures and conditions used. In the $SiO_2$ to $Al_2O_3$ mole ratio range of about 20 to about 120, approximately 80 $\pm$ 15% of the silica enters the product zeolite.

The crystallite size of the zeolite products made by the TMS process is controllable. By controlling the amount of QBr used in the reaction slurry, zeolite crystallites are formed with sizes ranging from submicrometer to about ten micrometers depending on the specific applications intended for the zeolites. Although the amount of QBr used in each synthesis is very small, it still may effectively control the crystallite size of the final product. In combination with proper control of other variables the TMS process produces a uniform size distribution.

Generally, the crystallite size in a given synthesis is inversely related to the concentration of QBr used. For example, in a well prepared reaction slurry, where a relatively large amount of QBr is used, more nuclei are generated, and, therefore, smaller size ZSM-5 crystallites

are obtained. On the other hand, if a relatively small amount of QBr is used in the same reaction slurry, less nuclei are generated and, therefore, larger size ZSM-5 crystallites are obtained. In either case, however, the amount of QBr used is extremely small.

There is no need for large amounts of the tetrapropyl ammonium ion template when making ZSM-5 according to the present invention. In fact, large relative amounts of Q are undesirable because these large cations end up within the structure and block diffusion through the pores. The resulting zeolite product would then require calcination before the sodium form of the zeolite could be ion exchanged to the ammonium and eventually the hydrogen form for catalytic applications.

The upper limit for the amount of Q ions in the reaction slurry or mix can be specified in terms of the number of moles of Si and the number of moles of Al in the reaction slurry. We define U as 1/96 of the sum of the number of moles of Si in the reaction mixture multiplied by 0.8 plus the number of moles of Al in the reaction mixture. On this basis the number of moles of tetrapropyl ammonium halide or hydroxide used in a reaction slurry to provide the Q ions is less than 0.8U for the broad range, less than 0.6U for the preferred range, and less than 0.4U for the most preferred range.

For a reaction slurry made up of

$$60\ SiO_2 : 1\ Al_2O_3 : 6\ Na_2O : 800\ H_2O : 0.155\ QBr$$

the amount of QBr is only about 7.4% of the stoichiometric amount of Q needed to fill up all of the intersections of the channels of the resulting zeolite. In other words, over 92% of the pore intersections in the structure are available for diffusion since they are not blocked.

It is possible to use even larger amounts of Q. In a reaction slurry with a composition such as:

60 $SiO_2$: 1 $Al_2O_3$: 6 $Na_2O$: 800 $H_2O$: 0.31 QBr

the amount of QBr employed is about 15% of the stoichiometric amount of QBr needed to block all intersections in the resulting zeolite. Even this larger concentration of QBr, does not impair the subsequent ion-exchange step where practically all of the sodium ions inside the as-synthesized product can be removed. It should be noted that about 85% of the pore intersections are still available to diffusion. After ion-exchange, the $Na_2O$ content is reduced to the level of about 0.15% or less which is not detrimental to the catalytic activity of the product.

The size of the ZSM-5 crystallite is further controlled by selecting the proper combination of soda and water concentrations. The concentration of reactive soda at any time is indirectly measured by the pH. Adding too much soda will cause large particles to be formed. For example, in a 60 $SiO_2$ to 1 $Al_2O_3$ system having greater than 10 moles of $Na_2O$ per mole of $Al_2O_3$ will result in large size crystallites. If the solids content is increased by reducing the amount of water, large crystallites will also be produced. For example, in a 60 $SiO_2$ to 1 $Al_2O_3$ system, when the amount of water is reduced from 800 moles of water for each mole of $Al_2O_3$ to 600 moles of water, the crystallite size increases.

The synthesis temperature also has an effect on the size of the ZSM-5 crystallites. The synthesis time varies inversely with temperatures in the range from about 100° to 280°C with the optimal temperature for making small crystallites being about 170°-190°C. If the reaction temperature is increased, the size of the crystallites will generally increase.

Our preferred method to prepare the reaction slurry and to ensure homogeneous mixing is to first dilute the silica source (such as Ludox) with about one-third of the required de-ionized water. The QBr is mixed with another one-third of the de-ionized water and this mixture is poured into the dilute silica product. The remaining water is mixed together with sodium hydroxide and sodium aluminate. It is noted that sodium hydroxide is miscible with sodium aluminate and no gel formation occurs upon mixing. Finally, the diluted sodium aluminate is mixed into the diluted Ludox and QBr solution, and a gel slurry immediately forms. After being hand stirred, the gel slurry forms a smooth reaction paste which is ready for heating in a stirred autoclave.

Alternatively, since the QBr crystals are normally first dissolved in water, a stock QBr solution can be made by dissolving, for example, 25 g QBr crystals in about 2000 g water. Then a measured amount of the stock QBr solution can be weighed out and mixed with the Ludox or other silica compounds as described above.

The reaction slurry is then subjected to hydrothermal conditions. The temperature of the synthesis in accordance with the TMS process varies from 100° to 280°C, but preferably from 140° to 230°C, and most preferably from about 170-190°C. The synthesis time also varies depending upon the reaction temperature, the proportion of silica to alumina, the pH, and other parameters of the reaction system, etc. It can take 2 to hundreds of hours to complete a synthesis. For example, at 175°C the TMS process takes about 8 hours in a stirred autoclave. It will take a longer time in a static autoclave, and still longer time in a reflux system at boiling temperature to produce the desired zeolite.

At 200°C, the reaction slurry is converted into the zeolite product in about 4 hours. The crystallite size of the final product is comparable to that which is produced at 175°C in 8 hours. However, at higher temperatures, the reaction slurry tends to generate larger crystallites despite the fact that the synthesis time may be further reduced.

The ZSM-5 can also be produced using a recycle of mother liquor to avoid waste of valuable $SiO_2$ and $Na_2O$. As mentioned earlier, although essentially all of the Q ion and all of the alumina charged to the reaction mixture end up in the product, the silica only reacts partially and the soda and water remain in excess. A good portion of this mother liquor containing silica and soda can readily be separated from the product and recovered by filtration. When using the mother liquor to make a new synthesis slurry a full complement of alumina and QBr are added but only a fraction of the original amounts of silica and sodium hydroxide need be added. The composition of the resulting recycle slurry is the same as the composition of the initial slurry. If a different starting slurry composition is desired, this can also be achieved using the recycled mother liquor. The recycle scheme may be repeated numerous times without detriment to the properties and quality (including crystallite size) of the resulting product. As shown in Example 18 numerous recycle runs can be used with by-product mother liquor to produce ZSM-5 of high quality and of very small crystallite size using only trace amounts of QBr.

The TMS process is significantly different from the basic Argauer et al process which uses much larger amounts of QBr. As shown in Table 1, the TMS process uses a very small amount of QBr which expressed in moles is less than

0.8U where U is 1/96 of the sum of the number of moles of Si in the reacting mixture multiplied by 0.8 plus the number of moles of Al in the resulting mixture. In contrast the Argauer et al process (U.S. Patent 3,702,886) uses large excess of QBr as templates over the stoichiometric amount of formula (2) which has been shown to be 4 molecules of QBr per unit cell of product. As a result, the product obtained in the Argauer et al ZSM-5 patent is occluded with Q ions and cannot be ion exchanged without a prior step to remove the blocking Q ions. Although the exact mechanism of crystallization is not known, we believe the use of the trace amount of QBr effectively begins the structuring of silicon and aluminum tetrahedrons around it and provides nuclei for subsequent crystallization without the use of additional Q ions as templates. We consider the Q ion as being an effective template material capable of directing the silica and alumina tetrahedrons into the ZSM-5 structure under hydrothermal conditions.

The characterization of the ZSM-5 product for crystalline purity and degree of crystallinity was carried out using standard x-ray diffraction methods by using a Norelco X-Ray Diffractometer manufactured by Philips Electronics, Inc. (Model 12045B/3).

A powder x-ray diffraction pattern was obtained under standardized conditions which include the packing of the zeolite product and the settings of the instrument controls. The pattern was examined qualitatively and quantitatively. The qualitative examination included establishing the presence of all the characteristic diffraction lines of ZSM-5 as defined by Argauer et al in U.S. Patent No. 3,702,886. ZSM-5 was considered the product made when all of the key diffraction lines were

found in our product and no extraneous lines were observed. The absence of foreign x-ray diffraction lines was considered indicative of crystalline purity.

The quantitative characterization of our product was made by comparing the peak height of the strongest diffraction line which occurs at a d-spacing of 3.85 ± 0.07 Angstrom units with the corresponding peak height of a reference ZSM-5 material prepared by the Argauer et al patent. The ratio of the peak height of our material to the peak height of the reference material times 100 was taken as the % crystallinity of our material. Within the experimental error of this method, the reference material had as large a peak height as any ZSM-5 material examined over several years of research. Therefore, that material was assigned 100% crystallinity. Although the method used is convenient and provides a quick and practical determination of the degree of crystallinity, it is not exact and may have an error of up to ± 20% of the value determined depending on several factors. For example, very small crystallites tend to give somewhat wide diffraction peaks which often results in smaller peak heights.

A further advantage of the present process is its very high reaction throughput which is possible because of the high equivalent product concentration in the reaction slurry coupled with the relatively short reaction time. The ZSM-5 zeolites readily form in the autoclave at temperatures of about 175°C in less than 8 hours.

The equivalent product concentration in the reaction slurry may be calculated after the reaction is completed and is expressed as the weight percent of ZSM-5 in the sodium form on a dry basis obtained from a reaction slurry. It is equal to 100 times the summation of the

weight of $SiO_2$, $Al_2O_3$, and equivalent $Na_2O$ in the zeolite product divided by the weight of the initial reaction slurry.

The reactor (autoclave) throughput is the weight of product prepared per unit of reactor (autoclave) volume per unit time. It is a very important parameter since it measures the productivity rate through the most capital intensive unit operation in the process, namely, the autoclaving step. The reactor (autoclave) throughput, or simply the throughput, may be expressed in various units. We shall use the following units and specific definition to describe our process:

Throughput is the weight in Kilograms of the ZSM-5 product obtained, expressed on a dry basis and normalized to the pure sodium form, per cubic meter of reactor (autoclave) volume per day.

For example, the "throughput" in an autoclaving step in which 360 grams of equivalent dry basis sodium ZSM-5 is obtained in an autoclaving step lasting 6 hours in an autoclave volume of 2400 $cm^3$ will be:

$$\frac{360\text{g} \times 10^{-3}\text{Kg/g} \times 10^{6}\ \text{cm}^3/\text{m}^3 \times 24\ \text{hours/day}}{2400\ \text{cm}^3 \times 6\ \text{hours}} = 600\ \text{Kg/m}^3\text{/day}$$

The scanning electron microscope is used to secure scanning electron micrographs (SEM) of the ZSM-5 zeolite product with magnifications in the range of from about 1,000 to about 100,000. Submicron crystallites of ZSM-5 products are clearly photographed and measured by SEM in 10,000-times magnification and greater.

The sources for the major reactants used in our synthesis of ZSM-5 zeolites are given below.

The source of silica used in the synthesis can be silica gel or silica hydrogel manufactured by Davison

Chemical Co., a division of W. R. Grace & Co.; another type of silica gel is Hi-Sil manufactured by Pittsburgh Plate Glass; Ludox, a colloidal silica sol manufactured by Dupont; fumed silica such as Cabosil manufactured by Cabot Corp., another type of fume silica is the by-product of the ferro-silicon industry which is widely available in industry; sodium silicate which is known as waterglass and is readily available commercially (it may also be a source of soda); and any other form of reactive silica.

Sodium hydroxide is a source of soda and it is also a commodity chemical which is commercially available.

Sodium silicate or water glass is often used as a source of soda and silica.

The source of alumina can be sodium aluminate, aluminum sulfate, or any other form of reactive alumina.

The source of tetrapropylammonium cations can be tetrapropylammonium halides such as the bromide or tetrapropylammonium hydroxide which are available from Eastman Kodak Co. and other companies or in the case of the halide which may be the resulting product of the reaction of a propyl halide and tripropylamine.

The ZSM-5 made by the present process can be directly used to make a catalyst. The reaction slurry made according to the present invention is heated at a temperature of from about 100-280°C for less than 24 hours to produce a ZSM-5 zeolite and a mother liquor. The reaction materials are cooled and filtered to obtain the zeolite reaction product. The filtered zeolite is washed and cation exchanged. The exchange may be made with $NH_4^+$, $H^+$, lanthanide or other desired cations as well as with mixtures of these. The exchanged zeolite is blended with a matrix material and formed into a particle. The formed particle is dried and calcined to yield a ZSM-5 zeolite containing catalyst.

Having described the basic aspects of our invention, the following examples are given to illustrate specific embodiments thereof.

## Example 1

This example illustrates the synthesis of zeolite ZSM-5 using a small amount of Q according to the present invention.

A Ludox and QBr mixture was formed by mixing together 425.8 g Ludox HS-40 (39.8% $SiO_2$, 60.2% $H_2O$), 44 g $H_2O$ and 300 g QBr solution (1.3% QBr, 98.7% $H_2O$). Then a second mixture was formed by mixing together 24.0 g sodium aluminate (20.0% $Al_2O_3$, 17.0% $Na_2O$, 63.0% $H_2O$), 34.6 g sodium hydroxide (38.7% $Na_2O$, 61.3% $H_2O$) and 44.7 g $H_2O$. The second mixture was added to the Ludox and QBr mixture and hand stirred to form the reaction slurry. The reaction slurry (873.1 g) was charged into a stirred autoclave for synthesis. Heat was applied to the autoclave until it reached about 175°C which took under 0.5 hour. The temperature was then maintained for 7.5 hours at about 175°C. The resultant product was cooled to room temperature, removed, filtered, washed using 1 liter of warm deionized water and dried overnight at 120°C.

A portion of this product was subjected to powder x-ray diffraction analysis and found to be pure ZSM-5 crystals with 89% degree of crystallinity. The sample was examined by SEM and found to consist of small aggregates of crystallites of about 0.05 micrometer. Chemical analysis showed 91.59% $SiO_2$, 3.18% $Al_2O_3$, 4.04% $Na_2O$ and 1.39% C. The composition of the product expressed in terms of one unit cell was calculated to be about:

$$Na_{3.2}\ Si_{92.2}\ Al_{3.8}\ O_{192}\ \square_{3.42}\ \boxed{Q}_{0.58}$$

Obviously the sodium, which calculates to 7.9 atoms per equivalent unit cell, which is in excess over the concentration of zeolitic sodium per unit cell (3.2) was not fully washed and it remained as NaOH in the pores. In spite of the high level of sodium ion present in the product a portion of the product was directly ion-exchanged with 2% $NH_4NO_3$ solution, followed by a warm water wash and dried at 120°C. The resulting exchanged zeolite contained only 0.14% $Na_2O$ by weight which indicates the fact that the presence of that level of Q ions did not impede an effective exchange into a useful material.

Example 2

Example 2 was carried out exactly as Example 1 except that the amount of QBr solution used was reduced to 150 g from 300 g. In order to maintain the amount of water equal to that used in Example 1, an additional 150 g of water was used in this experiment. The weight of slurry prepared was again 873.1 g. The density of the slurry was about 1.15 $g/cm^3$ and its volume was about 759 $cm^3$. After discharging from the autoclave and water washing, the zeolite product was dried overnight at 120°C. The dried product weight 136.8 g. From this value the equivalent product concentration was calculated to be about 15.6%. The autoclave throughput was calculated to have been about 540 $Kg/m^3$/day. X-ray diffraction analysis showed the product to be pure ZSM-5 with a degree of crystallinity of about 89%. SEM examination revealed small aggregates consisting of crystallites of about 0.1 micrometer in size. Chemical analyses on a dry basis gave 3.74 wt.% $Al_2O_3$, 3.20 wt.% $Na_2O$ and 93.06 wt.% $SiO_2$ (by difference). The carbon content was 0.79 wt.%.

The composition of the zeolite expressed in terms of one unit cell calculated from the analyses was:

$Na_{3.98}\ Si_{91.7}\ Al_{4.3}\ O_{192}\ \square_{3.68}\ \boxed{Q}_{0.32}$

The excess sodium over the amount shown for the unit cell corresponded to non-zeolitic NaOH present in the pores in an amount of about 2.1 molecules of NaOH per unit cell. This non-zeolitic sodium was the result of insufficient water washing.

It is noteworthy to point out that the amount of carbon contained in the sample was within normal analytical experimental errors equal to the weight of carbon contained in the amount of Q used in the raction (1.08 vs. 1.06 g). In other words, the Q ion was quantitatively occluded within the zeolite structure. In the case of the aluminum, the amount calculated basis the analysis and sample weight was slightly in excess over that actually charged to the reaction slurry (5.1 vs. 4.8 g). Again, analytical error accounts for the small difference. Overall, it is readily apparent that the aluminum used reacts quantitatively and becomes part of the zeolite. Direct exchange of the sodium zeolite with a 2% $NH_4NO_3$ aqueous solution gave a product which analyzed 0.04 weight percent $Na_2O$. Again, it is seen that the exchange proceeded efficiently in spite of the presence of trace concentrations of Q ions. Furthermore, the excess sodium resulting from insufficient washing was fully removed.

The exchanged product may be represented by the following symbolic average unit cell:

$(NH_4)_{3.98}\ Si_{91.7}\ Al_{4.3}\ O_{192}\ \square_{3.68}\ \boxed{Q}_{0.32}$

which upon calcination in air, say at 1000°F for 3 hours, would convert to:

$H_{4.3}\ Si_{91.7}\ Al_{4.3}\ O_{192}\ \square_{4}$

This example demonstrates the effectiveness of the TMS process to prepare excellent quality ZSM-5 of very small crystallite size in the hydrogen form, ready for catalytic applications, using only trace concentrations of Q ions by a practical non-polluting process requiring no calcination prior to $NH_4^+$ exchange at a high rate or reactor throughput using inexpensive raw materials.

## Examples 3-9

Examples 3 through 9 coupled with Examples 1 and 2 illustrate the increase in crystallite size as the concentration of QBr used is decreased.

The procedure of Example 1 was followed using various amounts of the QBr solution. The amount of water in each experiment was changed to compensate for the change in the amount of water added with the QBr solution.

Table 2 gives pertinent details on this group of experiments.

Table 2

Slurry Composition (moles): 60 $SiO_2$: $Al_2O_3$: 6 $Na_2O$: 800 $H_2O$: q QBr

| Example No. | 1 | 2 | 3 | 4 | 5 | 6 | 7 | 8 | 9 |
|---|---|---|---|---|---|---|---|---|---|
| Millimoles of QBr per mole of $Al_2O_3$ | 312 | 156 | 77.9 | 51.9 | 31.2 | 10.4 | 5.2 | 1.25 | 0.52 |
| % Crystallinity | 89 | 89 | 92 | 94 | 92 | 95 | 95 | 98 | 99.5 |
| Approximate value of "y" in formula (2) | 0.6 | 0.3 | 0.2 | 0.1 | 0.06 | 0.02 | 0.01 | 0.003 | 0.001 |
| Approximate size of crystallites ($\mu m$) | 0.05 | 0.1 | 0.15 | 0.2 | 0.3 | 0.6 | 0.7 | 1.5 | 2 |
| wt.% $Na_2O$ after exchange with $NH_4^+$ | 0.14 | 0.04 | 0.09 | 0.11 | 0.03 | 0.05 | 0.05 | 0.04 | - |

The results presented in Table 2 show that as the amount of QBr is reduced, the size of the ZSM-5 crystallite significantly increases.

Example 10

In order to complete this series in Table 2 of Examples 1-9 an identical preparation was made except that no QBr whatsoever was used. The resulting product after autoclaving, washing and drying exhibited only a suggestion of ZSM-5 crystallinity. SEM examination revealed that the morphology of the resulting product particles was indicative of amorphous materials with large non uniform irregular shapes.

Examples 11-13

These examples illustrate the results obtained when the reaction temperature was varied.

Reaction slurries were prepared according to Example 2. The reaction temperatures were increased to 200°C for Example 11, 220°C for Example 12 and 240°C for Example 13. The reaction times were shortened from 8 hours for Example 2 to 4, 3 and 2.5 hours respectively for Examples 11 and 13. The results obtained are set forth in Table 3.

Table 3

| | Example | | |
|---|---|---|---|
| | 11 | 12 | 13 |
| Temperature, °C | 200 | 220 | 240 |
| Reaction Time (hrs) | 4 | 3 | 2.5 |
| Approximate crystallite size, micrometer | 0.3 | 0.6 | 1.0 |

By increasing the reaction temperature the reaction times are decreased and the size of the crystallites are increased.

Examples 15-17

These examples illustrate the production of various ZSM-5 zeolites using reaction slurries having different reactant ratios.

The procedure of Example 2 was followed to obtain reaction slurries having mole ratios of

| | | | | | | |
|---|---|---|---|---|---|---|
| Ex. 15 | 20 $SiO_2$: | 1 $Al_2O_3$: | 2 $Na_2O$: | 267 $H_2O$: | 0.05 QBr |
| Ex. 16 | 30 $SiO_2$: | 1 $Al_2O_3$: | 2 $Na_2O$: | 400 $H_2O$: | 0.08 QBr |
| Ex. 17 | 120 $SiO_2$: | 1 $Al_2O_3$: | 2 $Na_2O$: | 1600 $H_2O$: | 0.31 QBr |

The x-ray diffraction patterns indicated the formation of ZSM-5.

Example 18

This example illustrates the capability of our method to recycle mother liquor in the synthesis of ZSM-5 in order to avoid waste of valuable $SiO_2$ and $Na_2O$.

As indicated in Example 2, essentially all of the Q ion and all of the alumina charged to the reaction mixture end up in the product. This is not the case for the silica which only reacts to about 80% of the level used in the reaction mixture, nor the soda. These substances, together with water, constitute the mother liquor which comes out of the autoclave step mixed with the ZSM-5 product. A good portion of this mother liquor can readily be separated from the product by filtration.

The general method used for recycling all or part of the mother liquor is to form a synthesis slurry of the original run composition using smaller amounts of soda and silica since these materials can be supplemented from the mother liquor and a full complement of alumina and QBr but only a fraction of the silica and sodium hydroxide.

The recycle scheme may be repeated numerous times without detriment to the properties and quality (including crystallite size) of the resulting product. The specific details which follow apply to an original run prepared as per the procedure of Example 2 and four consecutive runs in which mother liquor was recycled. After four consecutive successful recycle runs, 496 g of the mother liquor resulting from the fourth recycle run with a pH of 11.5 and a silica content of 6.45% was obtained. A fifth recycle run slurry was prepared by mixing 200 g of the mother liquor with 303 g of HS-40 Ludox. A solution containing 150 g of QBr solution as described in Example 2 and 100 g of mother liquor was added to the Ludox mix. The 5 g of NaOH (50%) and 24 g of sodium aluminate (20% $Al_2O_3$ and 17% $Na_2O$) were mixed and diluted in another 100 g of mother liquor. The second solution was slowly added to the Ludox mix with vigorous stirring to give the final reaction slurry which exhibited a pH of 12.7. The mole ratio of silica to alumina of the slurry was about 52:1. The reaction slurry was processed as per the procedure of Example 2. The weight of ZSM-5 product obtained was 113 g, the powder x-ray diffraction analysis showed pure ZSM-5 of excellent degree of crystallinity and the scanning electron microscope revealed the crystallite size to be about 0.2 micrometer. The chemical analysis of the final product was 2.63% $Na_2O$, 0.92% carbon, 4.09% $Al_2O_3$ and 90.87% $SiO_2$.

This example demonstrates the feasibility of numerous recycle runs using by-product mother liquor to produce ZSM-5 of high quality and of very small crystallite size using only trace amounts of QBr.

As to the overall process of this invention, we emphasize that the equivalent product concentration in the

autoclaving step of our process is generally greater than 12% and often greater than 14%. The high concentration and short reaction times combine to give excellent product throughputs typically greater than 400 $Kg/m^3/day$ and more preferably greater than 500 $Kg/m^3/day$. All of which are significant improvements over prior art.

It is understood that the foregoing detailed description is given merely by way of illustration and that many variations may be made therein without departing from the spirit of the invention.

WHAT IS CLAIMED IS:

1. A process to make the ZSM-5 zeolite

a) having a $SiO_2$ to $Al_2O_3$ mole ratio R greater than 5, and

b) having an average unit cell represented by the formula

$$M_{x-y}\ Si_{96-x}\ Al_x\ O_{192}\ \square_{4-y}\ \boxed{Q}_y$$

where $$R = \frac{2(96-x)}{x}$$

M represents monovalent cations,

$\square$ represents the intersections of the channels inside the ZSM-5 porous framework free of tetrapropyl ammonium ions, and

$\boxed{Q}$ represents the intersections of the channels inside the ZSM-5 porous framework having occluded tetrapropyl ammonium ions;

comprising

reacting a mixture containing

a source of silica,
a source of alumina,
a source of alkali metal hydroxide,
water, and
a small amount of tetrapropyl ammonium ions, said tetrapropyl ammonium ions being present in the reaction mixture in an effective amount and in an amount less than that which corresponds to $y = 0.8$ in the formula, and

recovering the ZSM-5 zeolite product.

2. A process according to Claim 1, wherein the amount of tetrapropyl ammonium ions being present in the reaction mixture is an amount less than that which corresponds to y = 0.6 in the formula.

3. A process according to Claim 1, wherein the amount of tetrapropyl ammonium ions being present in the reaction mixture is an amount less than that which corresponds to y = 0.4 in the formula.

4. A process according to Claim 1, wherein the mother liquor from a previous synthesis is recycled to supply part of the reaction mixture.

5. A process according to Claim 1, wherein there is essentially no alumina present and the product produced is silicalite.

6. The ZSM-5 zeolite made by the process of Claim 1.

7. Silicalite made by the process of Claim 1.

8. A process to make the ZSM-5 zeolite having a $SiO_2$ to $Al_2O_3$ mole ratio R greater than 5 comprising

reacting a mixture containing

a source of silica,

a source of alumina,

a source of alkali metal hydroxide,

water, and

a small amount of tetrapropyl ammonium ions, said tetrapropyl ammonium ions being present in the reaction mixture in an effective amount and in an amount less than 0.8U in which U is 1/96 of the sum of the number of moles of Si in the reacting mixture multiplied by 0.8 plus the number of moles of Al in the resulting mixture, and

recovering the ZSM-5 zeolite product.

9. A process according to Claim 8, wherein the amount of tetrapropyl ammonium ions being present in the reaction mixture is an amount less than 0.6U.

10. A process according to Claim 8, wherein the amount of tetrapropyl ammonium ions being present in the reaction mixture is an amount less than 0.4U.

11. A process according to Claim 8, wherein the mother liquor from a previous synthesis is recycled to supply part of the reaction mixture.

12. A process according to Claim 8, wherein there is essentially no alumina present and the product produced is silicalite.

13. A process according to Claim 8, wherein the reaction mixture contains no source of ZSM-5 crystallites which are discernible by powder x-ray diffraction.

14. A process according to Claim 8, wherein the reaction slurry mixture has the following molar ratios of ingredients

| | |
|---|---|
| $SiO_2$ to $Al_2O_3$ | greater than 6 |
| $H_2O$ to $OH^-$ | 20-120 |
| (Si +Al) to $H_2O$ | 0.03-0.15 |
| Q to U | less than 0.8 |

wherein essentially all of the Q charged to the reaction slurry becomes occluded in the reaction product; wherein essentially all of the $Al_2O_3$ charged to the reaction slurry becomes a part of the covalent network of the reaction product; and wherein the reaction temperature is from 100-280°C and the reaction time is less than 24 hours.

15. A process according to Claim 14, wherein molar ratios of ingredients are

| | |
|---|---|
| $SiO_2$ to $Al_2O_3$ | 20-120 |
| $H_2O$ to $OH^-$ | 30-100 |
| (Si +Al) to $H_2O$ | 0.05-0.12 |
| Q to U | less than 0.6 |

and wherein the reaction temperature is from 140-230°C and the reaction time is less than 12 hours.

16. A process according to Claim 15, wherein the molar ratios of ingredients are

| | |
|---|---|
| $SiO_2$ to $Al_2O_3$ | 40-80 |
| $H_2O$ to $OH^-$ | 50-70 |
| (Si +Al) to $H_2O$ | 0.06-0.09 |
| Q to U | less than 0.4 |

and wherein the reaction temperature is from 170-190°C and the reaction time is less than 8 hours.

17. A process according to Claim 8 wherein said ZSM-5 produced has

a high degree of crystallinity;

an occluded carbon content as prepared and water washed of less than 0.1 mole of carbon per mole of total silicon and aluminum contained in said ZSM-5;

a zeolitic alkali metal content as prepared and water washed of less than one mole per mole of contained aluminum;

a high degree of crystalline purity exhibiting a single phase crystalline material;

an aluminosilicate or silicalite structure;

the capacity to be readily exchangeable without prior removal of Q ions; and

containing as prepared and water washed less than 1/120 mole of nitrogen per mole of total silicon and aluminum contained in said ZSM-5.

18. The ZSM-5 zeolite made by the process of Claim 8.

19. Silicalite made by the process of Claim 8.

20. A nonpolluting process to make the ZSM-5 zeolite

a) having a $SiO_2$ to $Al_2O_3$ mole ratio R greater than 5, and

b) having an average unit cell represented by the formula

$$M_{x-y}\ Si_{96-x}\ Al_x\ O_{192}\ \square_{4-y}\ \boxed{Q}_y$$

where $R = \frac{2(96-x)}{x}$

M represents monovalent cations,

$\square$ represents the intersections of the channels inside the ZSM-5 porous framework free of tetrapropyl ammonium ions, and

$\boxed{Q}$ represents the intersections of the channels inside the ZSM-5 porous framework having occluded tetrapropyl ammonium ions;

comprising

(i) reacting a mixture containing

a source of silica,
a source of alumina,
a source of alkali metal hydroxide,
water, and
a small amount of tetrapropyl ammonium ions, said tetrapropyl ammonium ions being present in the reaction mixture in an effective amount and in an amount less than that which corresponds to y = 0.8 in the formula, said mixture having an equivalent product concentration greater than 12%,

at a rate corresponding to a throughput greater than 400 $Kg/m^3/day$, and

(ii) recovering the ZSM-5 zeolite product.

21. A process according to Claim 20, wherein the equivalent product concentration is greater than 14% and the throughput is greater than 500 $Kg/m^3/day$.

22. Small crystallites of ZSM-5

a) having a $SiO_2$ to $Al_2O_3$ mole ratio R greater than 5,

b) having crystallites with their smallest dimension above 0.3 micrometer,

c) having an average unit cell as synthesized and water washed represented by the formula

$$M_{x-y}\ Si_{96-x}\ Al_x\ O_{192}\ \square_{4-y}\ \boxed{Q}_y$$

where $R = \frac{2(96-x)}{x}$

M represents an alkali metal cation,

y is less than 0.8,

$\square$ represents the intersections of the channels inside the ZSM-5 porous framework free of tetrapropyl ammonium ions, and

$\boxed{Q}$ represents the intersections of the channels inside the ZSM-5 porous framework having occluded tetrapropyl ammonium ions,

said crystallites being ion-exchangeable without requiring a preliminary calcination step.

23. The composition of Claim 22, wherein M in the formula is Na.

24. The composition of Claim 22, which has been further ammonium ion exchanged and where M in the formula is $NH_4$.

25. The composition of Claim 22, wherein M in the formula is H.

26. The composition of Claim 25, wherein the cation M has been at least partially replaced by the equivalent amount of lanthanide ion.

27. The composition of Claim 24 after subsequent removal of the Q.

28. The composition of Claim 25 after subsequent removal of the Q.

29. The composition of Claim 26 after subsequent removal of the Q.

30. A process for making a catalyst comprising

a) mixing together a reaction slurry as defined in Claim 1;

b) heating the reaction slurry at a temperature of from about 100-280°C for less than 24 hours to produce a ZSM-5 zeolite and a mother liquor;

c) cooling the reaction materials from step (b);

d) filtering the cooled reaction materials to obtain the zeolite reaction product;

e) washing the filtered zeolite;

f) cation exchanging the washed zeolite;

g) blending the exchanged zeolite with a matrix material;

h) forming the blended material into a formed particle;

i) drying the formed particle; and

j) calcining the dried particle to yield a ZSM-5 zeolite containing catalyst.

31. A process according to Claim 30, wherein the cation exchange is made with $NH_4^+$ ions.

32. A process according to Claim 30, wherein the cation exchange is made with $NH_4^+$ ions and lanthanide ions.

33. A process according to Claim 30, wherein the cation exchange is made with $H^+$ ions.

34. A process according to Claim 30, wherein the cations exchange is made with $H^+$ ions and lanthanide ions.

35. A ZSM-5 zeolite containing catalyst made by the process of Claim 30.

36. A process for making a catalyst comprising

a) mixing together a reaction slurry as defined in Claim 8;

b) heating the reaction slurry at a temperature of from about 100-280°C for less than 24 hours to produce a ZSM-5 zeolite and a mother liquor;

c) cooling the reaction materials from step (b);

d) filtering the cooled reaction materials to obtain the zeolite reaction product;

e) washing the filtered zeolite;

f) cation exchanging the washed zeolite;

g) blending the exchanged zeolite with a matrix material;

h) forming the blended material into a formed particle;

i) drying the formed particle; and

j) calcining the dried particle to yield a ZSM-5 zeolite containing catalyst.

37. A process according to Claim 36, wherein the cation exchange is made with $NH_4^+$ ions.

38. A process according to Claim 36, wherein the cation exchange is made with $NH_4^+$ ions and lanthanide ions.

39. A process according to Claim 36, wherein the cation exchange is made with $H^+$ ions.

40. A process according to Claim 36, wherein the cations exchange is made with $H^+$ ions and lanthanide ions.

41. A ZSM-5 zeolite containing catalyst made by the process of Claim 36.